(19) Europäisches Patentamt
European Patent Office
Office européen des brevets

(11) Veröffentlichungsnummer: **0 156 262**
**B1**

(12) # EUROPÄISCHE PATENTSCHRIFT

(45) Veröffentlichungstag der Patentschrift: **30.08.89**

(21) Anmeldenummer: **85102984.3**

(22) Anmeldetag: **15.03.85**

(51) Int. Cl.$^4$: **C 08 G 63/52**, C 08 L 67/06, C 08 F299/04

(54) **Verfahrung zur Herstellung von ungesättigen Polyestern.**

(30) Priorität: **27.03.84 DE 3411150**

(43) Veröffentlichungstag der Anmeldung: **02.10.85 Patentblatt 85/40**

(45) Bekanntmachung des Hinweises auf die Patenterteilung: **30.08.89 Patentblatt 89/35**

(84) Benannte Vertragsstaaten: **AT DE FR GB IT SE**

(56) Entgegenhaltungen:
**EP-A- 0 039 838**
**AT-B- 330 462**
**DE-A- 1 918 061**
**DE-B- 2 051 663**
**DE-B- 2 309 641**
**GB-A- 2 048 910**
**US-A- 3 275 711**
**CHEMICAL ABSTRACTS, Band 94, Nr. 24, 15. Juni 1981, Zusammenfassungsnr. 193098k, Columbus, Ohio, US; & JP - A - 80 155 024 (MITSUBISHI PETROCHEMICAL CO., LTD.) 03.12.1980**
**Die Akte enthält technische Angaben, die nach dem Eingang der Anmeldung eingereicht wurden und die nicht in dieser Patentschrift enthalten sind.**

(73) Patentinhaber: **BAYER AG**
**D-5090 Leverkusen 1 Bayerwerk (DE)**

(72) Erfinder: **Hess, Bernhard, Dr.**
**Kaldenhausenerstrasse 84**
**D-4130 Moers 2 (DE)**
Erfinder: **Brassat, Bert, Dr.**
**Bethelstrasse 24**
**D-4150 Krefeld 1 (DE)**
Erfinder: **Peltzer, Bernhard, Dr.**
**Sebastian-Kneipp-Weg 15**
**D-4150 Krefeld 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent. Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Die Erfindung betrifft ein zweistufiges Verfahren zur Herstellung von Polyesterharzen auf Basis α,β-ethylenisch ungesättigter Polyester und damit copolymerisierbarer Monomerer.

Aus üblichen ungesättigten Polyesterharzen hergestellte glasfaserverstärkte gehärtete Teile zeigen bei Biegebeanspruchung ein Knistern, das auf eine Schädigung des Verbunds hinweist.

Auf dem Markt werden zwar Polyesterharze, die zur Elastifizierung von hoch ungesättigten (und damit sehr harte Formkörper ergebenden) Polyesterharzen dienen sollen, angeboten. Die Säurekomponente der Polyester dieser Harze besteht aus einem hohen Anteil Adipinsäure und relativ wenig Maleinsäure(anhydrid). Die mit Hilfe solcher Polyester hergestellten gehärteten Teile sind meist mürbe, d. h. sie brechen beim Versuch, sie zu knicken. Als alleinige Polyesterkomponente sind diese Harze also nicht brauchbar.

Aufgabe der Erfindung war es also, ungesättigte Polyesterharze bereitzustellen, die sich ohne zusätzliches elastifizierendes Harz zu elastischen und (auch bei tiefer Temperatur) schlagzähen Formkörpern härten lassen.

Es wurde ein Verfahren gefunden zur Herstellung von ungesättigten Polyesterharzen aus

A. 30 bis 70 Gew.-Teilen aus α,β-ethylenisch ungesättigtem Polyester und

B. 30 bis 70 Gew.-Teilen mit A copolymerisierbarem Monomer,

wobei der Polyester A ein Reaktionsprodukt ist aus

(a) mindestens einer α,β-ethylenisch ungesättigten Dicarbonsäure und/oder ihrem Anhydrid,
(b) mindestens einer hydrierten phthalsäure und/oder ihrem Anhydrid,
(c) mindestens einem Etherglykol,
(d) mindestens einem Verzweigungsmittel,
(e) gegebenenfalls anderen Carbonsäuren,
(f) gegebenenfalls anderen Alkoholen und
(g) gegebenenfalls Polyisocyanat und wobei

der Gehalt an Fumarsäureresten mindestens 15 Mol-%, bezogen auf Dicarbonsäurereste (a), der Gehalt an Dicarbonsäureresten (a) höchstens 30 Mol-%, bezogen auf die Summe der Polycarbonsäurereste, der Gehalt an Etherglykolresten entsprechend 0,2 bis 0,5 Mol Ethergruppen pro 100 g Polyester A, der Gehalt an Resten einkondensierter Verzweigungsmittel 1 bis 15 Mol-%, bezogen auf die Summe der Alkoholreste, der Gehalt an Resten anderer Säuren und anderer Alkohole jeweils 0 bis 15 Mol-%, bezogen auf die Summe sämtlicher Säure bzw. Alkoholreste, der Urethangruppengehalt 0 bis 0,05 Mol pro 100 g Polyester A, die Säurezahl des polyesters A weniger als 50 und die Hydroxyzahl des Polyesters A weniger als 70 betragen, das dadurch gekennzeichnet ist, daß man in einer ersten Verfahrensstufe aus den Komponenten (b), (c) und (d) sowie gegebenenfalls (e) und gegebenenfalls (f) ein verzweigtes Vorkondensat herstellt, dessen Säurereste zu mindestens 85 Mol-% aus Resten der Komponente (b) bestehen und das Reste einkondensierter Verzweigungsmittel (d) entsprechend 1 bis 15 Mol-%, bezogen auf die Summe der Alkoholreste enthält, wobei die Summe der Säure- und Hydroxylzahl 50 bis 120 beträgt und mindestens die Hälfte dieser Summe auf die Hydroxylzahl entfällt, an dieses Vorkondensat die Komponente (a) ankondensiert mit der Maßgabe, daß man als Komponente (a) entweder Fumarsäure einsetzt oder daß bei Einsatz von Maleinsäure(anhydrid) eine cis-trans-Isomerisierung im erforderlichen Umfang stattfinden kann.

Die durch Härtung der erfindungsgemäßen Harze erhältlichen produkte sind so elastisch, daß sich ein daraus hergestellter 2 mm dicker Prüfstab mehrmals an derselben Stelle knicken läßt, ohne zu brechen. Infolge dieser Elastizität tritt in glasfaserverstärkten Preßteilen kein Knistern auf, was darauf hindeutet, daß der Verbund bei Biegebeanspruchung nicht geschädigt wird. Ferner zeigen die glasfaserverstärkten Preßteile beim Bruch eine glatte splitterfreie Kante, während bei den Preßteilen des Standes der Technik zuerst die Harzmatrix bricht, der Bruch dann entlang den Glasfasern verläuft und Splitter bildet.

Je größer der Monomergehalt, je höher der Gehalt an Etherglykolresten und je niedriger der Verzweigungsgrad der polyester A, desto elastischer sind die gehärteten Teile. Die Verzweigermenge verleiht dem gehärteten faserverstärkten Produkt die gewünschte Biegesteifigkeit und Wärmeformbeständigkeit ; die Etherglykole führen zu hoher Elastizität.

Enthalten die Polyester statt der Reste hydrierter phthalsäuren z. B. Adipinsäurereste, so sind die gehärteten Teile zu elastisch, so daß sie nach der Heißhärtung nicht ohne Deformation entformt werden können. Enthalten die Polyester nicht Fumaratreste in ausreichendem Maß, sondern stattdessen Maleinatreste, so entstehen nach Eindickung mit chemischen Verdickern, wie z. B. Magnesiumoxid, bei der Heißhärtung mürbe und deshalb technisch nicht brauchbare Produkte.

Daß Polyesterharze des erfindungsgemäßen Typs als Basisharze zur Herstellung von Harzmatten und teigartigen Preßmassen bisher noch nicht verwendet worden sind, liegt an einem Vorurteil, das gegenüber diesen Weichharzen besteht : Man hat nicht für möglich gehalten, daß mit Polyesterharzen, die ohne Füllstoffe und Glasfasern Härtungsprodukte mit einer Wärmestandfestigkeit von ca. 30 °C ergeben, Harzmatten und teigartige Preßmassen hergestellt werden können, die bei ca. 150 °C verpreßbar und nach erfolgter Härtung bei dieser Temperatur ohne Deformation entformbar sind. Die aus

den erfindungsgemäßen Harzen hergestellten glasfaserverstärkten Preßteile besitzen überraschenderweise Wärmeformbeständigkeiten von teilweise weit über 200 °C und einen Elastizitätsmodul von ca. 4 000 Mpa (vgl. Tabelle 3 der Beispiele).

Für die Herstellung der Polyester A bevorzugte ungesättigte Dicarbonsäuren oder deren Anhydride (a) sind solche mit 4 oder 5 C-Atomen, wie z. B. Malein- oder Citraconsäureanhydrid und Fumarsäure.

Für die Herstellung der polyester A bevorzugte hydrierte Phthalsäuren oder deren Anhydride (b) sind Tetra- und Hexahydrophthalsäure, methylierte Tetra- und Hexahydrophthalsäure sowie Endomethylentetrahydrophthalsäure, Hexachlorendomethylen-tetrahydrophthalsäure oder die Anhydride der genannten Verbindungen. Besonders bevorzugt sind Tetra- und Hexahydrophthalsäure und ihre Anhydride.

Für die Herstellung der Polyester A bevorzugte Etherglykole (c) sind Di-, Tri- und Polyethylenglykol sowie Di-, Tri- und Polypropylenglykol, wobei die Polyglykole durchschnittlich 4 bis 20 Ethylenoxy- oder Propylenoxygruppen enthalten können.

Für die Herstellung der Polyester A bevorzugte Verzweigungsmittel (d) sind z. B. Polycarbonsäuren der Formel

$$A\,(—COOH)_x$$

wobei A einen x-wertigen, gegebenenfalls substituierten aliphatischen Rest mit vorzugsweise 2 bis 20 C-Atomen, einen cycloaliphatischen Rest mit vorzugsweise 5 bis 16 C-Atomen, einen araliphatischen Rest mit vorzugsweise 7 bis 20 C-Atomen, einen aromatischen Rest mit vorzugsweise 6 bis 15 C-Atomen, oder einen Heteroatome, wie N, O oder S, im Ring enthaltenden aromatischen oder cycloaliphatischen Rest mit 2 bis 12 C-Atomen und x eine ganze Zahl von 3 bis 6, vorzugsweise 3 bis 4, bedeuten, wie z. B. Trimellithsäure, Trimesinsäure, Pyromellithsäure, Butantetracarbonsäure, Ethylentetracarbonsäure, Tricarbalkylsäure ;

Polyole der Formel

$$B(—OH)_a$$

wobei B einen a-wertigen aliphatischen Rest mit vorzugsweise 3 bis 20 C-Atomen, einen cycloaliphatischen Rest mit vorzugsweise 5 bis 16-C-Atomen, einen araliphatischen Rest mit vorzugsweise 7 bis 20 C-Atomen, einen aromatischen Rest mit vorzugsweise 6 bis 15 C-Atomen und einen N, O oder S enthaltenden heterocyclischen Rest mit vorzugsweise 2 bis 12 C-Atomen und a eine ganze Zahl von 3 bis 6, vorzugsweise 3 oder 4, bedeuten, wie z. B. Trimethylolethan und -propan, Glycerin, Pentaerythrit, 1,2,6-Hexantriol, Mannit, Sorbit, Trishydroxyalkylisocyanurate und -alkyltriazolidin-3,5-dione ;

Hydroxycarbonsäuren der Formel

$$(HOOC—)_yA(—OH)_z$$

in der A die oben angeführten Bedeutungen hat und y sowie z unabhängig voneinander eine ganze Zahl von 1 bis 3, vorzugsweise 1 oder 2, sein können, mit der Maßgabe, daß die Summe y + z mindestens 3 beträgt, wie z. B. Äpfelsäure, Zitronensäure, Weinsäure sowie Hydroxybenzoldicarbonsäuren.

Für die Herstellung der Polyester A gegebenenfalls zu verwendende « andere » Carbonsäuren (e) sind vorzugsweise aliphatische Dicarbonsäuren mit 2 bis 12 C-Atomen und cycloaliphatische gesättigte und ungesättigte und aromatische Dicarbonsäuren mit 8 bis 12 C-Atomen. Natürlich können auch die entsprechenden Anhydride eingesetzt werden. Bevorzugte « andere » Carbonsäuren sind z. B. Phthalsäure oder Phthalsäureanhydrid, Isophthalsäure, Terephthalsäure, Bernsteinsäure bzw. Bernsteinsäureanhydrid und Bernsteinsäureester, Adipinsäure, Sebacinsäure. Um schwerentflammbare Harze herzustellen, können z. B. Tetrachlorphthalsäure oder Tetrabromphthalsäure verwendet werden.

Für die Herstellung der Polyester A gegebenenfalls zu verwendende « andere » Alkohole (c) sind vorzugsweise Diole mit 2 bis 8 C-Atomen, wie z. B. Ethylenglykol, Propandiol-1,2, Propandiol-1,3, Butandiol-1,3, Butandiol-1,4, Hexandiol-1,6, 2,2-Bis-(4-hydroxycyclohexyl)-propan, bis-oxalkyliertes Bisphenol A und Perhydrobisphenol.

Für die Herstellung der Polyester A gegebenenfalls zu verwendende Polyisocyanate sind vorzugsweise aliphatische, cycloaliphatische und aromatische Diisoxyanate mit 6 bis 18 C-Atomen, wie z. B. 1,6-Hexamethylendiisocyanat, 2,4'- und 4,4'-Dicyclohexylmethandiisocyanat, « Isophoron »-diisocyanat, 2,4- und 2,6-Toluylendiisocyanat, 2,4'- und 4,4'-Diphenylmethandiisocyanat und deren Mischungen sowie höherfunktionelle Polyisocyanate, deren Funktionalität durch Umsetzung mit Verbindungen, die mit Isocyanaten reagieren können (z. B. einwertigen Alkoholen auf 2 verringert worden ist.

Die nach dem erfindungsgemäßen Verfahren eingesetzte maximale Menge Komponente (a) beträgt 1 Mol, vorzugsweise 0,2 bis 0,7 Mol, pro Mol Hydroxyl des Vorkondensats.

Die erste Stufe des Verfahrens kann bei 160 bis 240, vorzugsweise 180 bis 220 °C, die zweite Stufe bei 120 bis 220, vorzugsweise 180 bis 210 °C, durchgeführt werden. Das erfindungsgemäße Verfahren führt dazu, daß die Reste der Dicarbonsäure (a) nicht statistisch im Polyester verteilt sind, sondern im wesentlichen an den Kettenenden der Polyestermoleküle stehen. Die so hergestellten Polyester führen — verglichen mit Polyestern, bei deren Herstellung die Gesamtmenge an Komponente (a) gleich zu

Reaktionsbeginn eingesetzt wird, so daß die Doppelbindungen statistisch verteilt sind — zu elastischeren Härtungsprodukten.

Der resultierende Polyester kann — falls gewünscht — in der Schmelze oder nach dem Lösen im Monomer B mit Polyisocyanat (g) umgesetzt werden, was zu einer Molekulargewichtserhöhung führt. Die Polyisocyanatmenge wird am besten experimentell ermittelt, da der Vorstufenpolyester schon verzweigt ist und beim Umsatz mit polyisocyanat leicht Gelierung eintritt. Das Reaktionsprodukt sollte jedoch frei von reaktiven Isocyanatgruppen sein, so daß eine hinreichende Lagerstabilität des Endproduktes gewährleistet ist.

Unter Säureresten werden im Sinne der Erfindung die um die Hydroxylreste der Carboxylgruppen verminderten Reste der Säuren, z. B. also —OC—R—CO—, unter Alkoholresten die um die Wasserstoffatome verminderten Reste der Alkohole, also z. B. —O—R—O—, verstanden.

Die Polyester A besitzen in der Regel als Zahlenmittel $\overline{M}_n$ bestimmte Molekulargewichte von 300 bis 5 000, vorzugsweise von 400 bis 3 000 (dampfdruckosmometrisch gemessen in Dioxan und Aceton ; bei differierenden Werten wird der niedrigere als korrekt angesehen).

Als mit den ungesättigten Polyestern A copolymerisierbare Monomere B eignen sich in der Polyestertechnologie gebräuchliche ungesättigte Verbindungen, die bevorzugt α-Substituierte Vinylgruppen oder β-substituierte Allylgruppen tragen, bevorzugt Styrol ; aber auch beispielsweise kernchlorierte und -alkylierte bzw. -alkenylierte Styrole, wobei die Alkenyl- bzw. Alkylgruppen 1 bis 4 Kohlenstoffatome enthalten können, wie z. B. Vinyltoluol, Divinylbenzol, α-Methylstyrol, tert.-Butylstyrol, Chlorstyrole ; Vinylester von Carbonsäuren mit 2 bis 6 Kohlenstoffatomen, bevorzugt Vinylacetat ; Vinylpyridin, Vinylnaphthalin, Vinylcyclohexan, Acrylsäure und Methacrylsäure und/oder ihre Ester (vorzugsweise Vinyl-, Allyl- und Methallylester) mit 1 bis 4 Kohlenstoffatomen in der Alkoholkomponente, Allylverbindungen wie Allylbenzol und Allylester wie Allylacetat, Phthalsäurediallylester, Isophthalsäurediallylester, Fumarsäurediallylester, Allylcarbonate, Diallylcarbonate, Triallylphosphat, Triallylcyanurat sowie Diallylether.

Um die erfindungsgemäßen Polyesterharze vor unerwünschter vorzeitiger Polymerisation zu bewahren, empfiehlt es sich, bereits bei der Herstellung Polymerisationsinhibitoren oder Antioxidantien zuzusetzen. Geeignete Hilfsmittel dieser Art sind beispielsweise in « Methoden der Organischen Chemie » (Houben-Weyl), 4. Auflage, Band XIV/1, S. 433-452, Georg Thieme-Verlag, Stuttgart, 1961, beschrieben. Sehr gut geeignet ist z. B. Hydrochinon in einer Konzentration von 0,01 bis 0,05 gew.-T1., bezogen auf Polyesterharz (A + B).

Den erfindungsgemäßen Polyesterharzen können die als chemische Verdicker bekannten Oxide und Hydroxide der Metalle der 2. Hauptgruppe des Periodensystems, bevorzugt des Magnesiums und Calciums, aber auch z. B. des Zinks, ferner die chemische Verdickung beschleunigende oder regelnde Zusätze, wie 0,1 bis 0,5 Gew.-T1. Wasser oder Zusätze gemäß DE-OS 1 544 891, z. B. aliphatische Carbonsäuren oder partielle Phosphorsäureester, in wirksamen Mengen zugesetzt werden.

Zu einem beliebigen Zeitpunkt vor der Eindickung werden den erfindungsgemäßen Polyesterharzen übliche Mengen Polymerisationsinitiatoren zugesetzt. Als solche eignen sich beispielsweise Diacylperoxide wie Diacetylperoxide, Dibenzoylperoxid, Di-p-chlorobenzoylperoxid, Peroxyester wie tert.-Butylperoxyacetat, tert.-Butylperoxy-benzoat, tert.-Butylperoctoat, Dicyclohexylperoxydicarbonat oder 2,5-Dimethylhexan-2,5-diperoctoat, Alkylperoxide wie Bis-(tert.-butylperoxybutan), Dicumylperoxid, tert.-Butylcumylperoxid, Di-tert.-butyl-peroxid, Hydroperoxide wie Cumolhydroperoxid, tert.-Butylhydroperoxid, Cyclohexanonhydroperoxid, Methylethylketonhydroperoxid, Perketale, Ketonperoxide wie Acetylacetonperoxid oder Azoisobutyrodinitril.

Bevorzugte faserförmige Verstärkungsmaterialien sind anorganische Fasern wie Metall-, Asbest-, Kohlenstoff-, insbesondere Glasfasern, und organische Fasern, z. B. Baumwoll-, Polyamid-, Polyester-, Polyacrylnitril- oder Polycarbonatfasern.

Bevorzugte anorganische Füllstoffe sind Kreide, Talkum, Quarz- und Schiefermehl, Kaolin, Kalkspat, Dolomit, Glimmer, Schwerspat, Kieselgur und Tonerden.

Übliche Hilfs- und Zusatzstoffe, die mitverwendet werden können, sind z. B. organische und anorganische Pigmente, Farbstoffe, Gleit- und Trennmittel, wie Zinkstearat, Thixotropiermittel, UV-Absorber, insbesondere schwundmindernde Zusätze (DE-PS 16 94 857, 19 53 062) wie z. B. Homo-, Co- und Pfropfpolymerisate des Styrols und seiner Derivate, des Ethylens, des Vinylacetats, der (Meth)-Acrylsäure und ihrer Ester, aber auch Celluloseester und Polykondensate sowie Polyadditionsverbindungen, in Mengen von 1 bis 30, vorzugsweise 3 bis 15, Gew.-%, bezogen auf Polyesterharz (A + B). Aus den nach dem erfindungsgemäßen Verfahren hergestellten ungesättigten Polyesterharzen (A + B) können Harzmatten, sowie teigartige Preßmassen hergestellt werden, die zu entsprechenden Formkörpern verarbeitbar sind.

## Beispiele

Die Zusammensetzung und Kennzahlen der erfindungsgemäßen ungesättigten Polyester UP 1 bis UP 3 sowie des Vergleichpolyesters VP 1 sind nachfolgend in Tabelle 1 aufgeführt. Prozentangaben bedeuten Gewichtsprozente. Viskositätsangaben beziehen sich auf Messungen im Kugelfallviskosimeter nach Höppler bei 20 °C. Die in Klammern gesetzten Zahlen bedeuten Mole, die davorstehenden

Gewichtsteile.

Abkürzungen :

MSA Maleinsäureanhydrid
THPSA Tetrahydrophthalsäureanhydrid
EG Ethylenglykol
DiEG Diethylenglykol
TriEG Triethylenglykol
TMP Trimethylolpropan
TDI Toluylendiisocyanat
SZ Säurezahl des Harzes in mg KOH/g
OHZ OH-Zahl des Harzes in mg KOH/g (Acetylierungsmethode)
NCO g reaktives NCO pro 100 g Harz
Mol O Mol Sauerstoff pro 100 g Harz
Visk. 65 Viskosität der 65 gew.-%igen Lösung in Styrol in mPa.s bei 20 °C
Knick-test A gehärtete 65 gew.-%ige Lösung in Styrol ohne MgO-Zusatz
Knick-test B gehärtete 65 gew.-%ige Lösung in Styrol mit MgO-Zusatz (Ausführung des Knicktests s. unter « Herstellung der ungesättigten Polyesterharze »)

(Siehe Tabelle 1 Seite 6 f.)

I. Herstellung der ungesättigten Polyesterharze

Die Herstellung der ungesättigten Polyester erfolgte in einem Rührkessel mit absteigendem Kühler nach dem Schmelzkondensationsverfahren.

1. und 2. Stufe

Nach der Einwaage der Veresterungskomponenten der 1. Stufe wurde unter Stickstoff auf 160 °C geheizt und diese Temperatur 2 Stunden gehalten. Danach wurde die Temperatur in 9 Stunden auf 230 °C gesteigert. Bei dieser Temperatur wurde verestert, bis die angegebenen Kennzahlen der 1. Stufe erreicht waren. Danach wurde auf 160 °C abgekühlt, 0,02 Gew.-%, bezogen auf die Schmelze, Hydrochinon und danach MSA zugegeben und unter Stickstoff innerhalb von 2 Stunden auf 200 °C hochgeheizt. Nach 2 Stunden bei 200 °C wurde die Schmelze auf 110 °C abgekühlt und 65 gew.-%ig in Styrol gelöst, welches 0,03 Gew.-%, bezogen auf die Schmelze, Di-tert.-butylchinon enthielt.

3. Stufe

In die auf 70 °C abgekühlte styrolische Lösung wurde TDI eingerührt und die Mischung 3 Stunden bei 75 °C gehalten. Nach dieser Zeit war der NCO-Gehalt auf $>$ 0,05 % gesunken und das Produkt wurde auf Raumtemperatur abgekühlt.

Die jeweils 65 gew.-%igen Polyesterharze sind nach der 2. Stufe zusätzlich mit (II.) und nach der 3. Stufe mit (III.) gekennzeichnet.

Ausführung des Knicktestes A

Das 65 gew.-%ige Polyesterharz wurde mit 1 Gew.-% phlegmatisiertem tert.-Butylperbenzoat versetzt, das Harz zwischen zwei Glasplatten mit einem Abstand von 2 mm gegossen und 1 Stunde bei 80 °C gehärtet ; daran schloß sich eine Temperung bei 100 °C über 15 Stunden an. Die auf Raumtemperatur abgekühlte Platte wurde entformt, in 5 mm breite Streifen geschnitten und diese von Hand jeweils an derselben Stelle um 180 °C geknickt. Die Anzahl der Knickungen vor dem Bruch sind in der Tabelle 1 unter « Knicktest A » eingetragen.

Ausführung des Knicktestes B

Knicktest B unterschied sich vom Knicktest A dadurch, daß vor der Zugabe des Peroxids 1,5 Gew.-% MgO eingerührt und die Polyesterharze vor der Härtung 24 Stunden bei Raumtemperatur eingedickt wurden.

Tabelle 1

| | | UP 1 | UP 2 | UP 3 | VP 1 |
|---|---|---|---|---|---|
| 1. Stufe | THSPA | 152,0 (1,0) | 152,0 (1,0 | 152,0 (1,0) | 152,0 (1,0) |
| | EG | 24,8 (0,4 | - | 31,0 (0,5) | - |
| | DiEG | - | 108,1 (1,02) | 58,3 (0,55) | - |
| | TriEG | 97,5 (0,65) | - | - | 150,0 (1,05) |
| | TMP | 13,4 (0,1) | 13,4 (0,1) | 13,4 (0,1) | 13,4 (0,1) |
| | | 287,7 | 273,5 | 254,7 | 315,4 |
| | Wasser (-) | 18,0 | 18,0 | 18,0 | 18,0 |
| | | 269,7 | 255,5 | 236,7 | 297,4 |
| 2. Stufe | MSA | 14,7 (0,15) | 14,7 (0,15) | 14,7 (0,15) | 14,7 (0,15) |
| 3. Stufe | TDI | 4,4 (0,025) | 4,4 (0,025) | 4,4 (0,025) | 4,4 (0,025) |
| | **Kennzahlen** | | | | |
| 1. Stufe | SZ | 6 | 5 | 6 | 7 |
| | OHZ | 83 | 68 | 95 | 90 |
| 2. Stufe | SZ | 25 | 28 | 28 | 24 |
| | OHZ | 45 | | 50 | |
| | Visk. 65 | 550 | 930 | 720 | 429 |
| 3. Stufe | SZ | 25 | 28 | 28 | 24 |
| | Visk. 65 | 866 | 1350 | 1260 | 640 |
| | NCO | 0 | 0 | 0 | 0 |
| | Mol O | 0,45 | 0,37 | 0,22 | 0,62 |
| | **Eigenschaften nach Härtung** | | | | |
| | Knicktest A | 35 | 25 | 10 | Gummi, keine |
| | Knicktest B | 28 | 13 | 3 | Festigkeit! |

**Patentansprüche**

1. Verfahren zur Herstellung von ungesättigten Polyesterharzen aus
A. 30 bis 70 Gew.-Teilen aus α,β-ethylenisch ungesättigtem Polyester und
B. 30 bis 70 Gew.-Teilen mit A copolymerisierbarem Monomer,
wobei der polyester A ein Reaktionsprodukt ist aus
(a) mindestens einer α,β-ethylenisch ungesättigten Dicarbonsäure und/oder ihrem Anhydrid,
(b) mindestens einer hydrierten phthalsäure und/oder ihrem Anhydrid,
(c) mindestens einem Etherglykol,
(d) mindestens einem Verzweigungsmittel,
(e) gegebenenfalls anderen Carbonsäuren,
(f) gegebenenfalls anderen Alkoholen und
(g) gegebenenfalls polyisocyanat und wobei
der Gehalt an Fumarsäureresten mindestens 15 Mol-%, bezogen auf Dicarbonsäurereste (a), der Gehalt an Dicarbonsäureresten (a) höchstens 30 Mol-%, bezogen auf die Summe der Polycarbonsäurereste, der Gehalt an Etherglykolresten entsprechend 0,2 bis 0,5 Mol Ethergruppen pro 100 g Polyester A, der Gehalt an Resten einkondensierter Verzweigungsmittel 1 bis 15 Mol-%, bezogen auf die Summe der Alkoholreste, der Gehalt an Resten anderer Säuren und anderer Alkohole jeweils 0 bis 15 Mol-%, bezogen auf die Summe sämtlicher Säurebzw. Alkoholreste, der Urethangruppengehalt 0 bis 0,05 Mol pro 100 g Polyester A, die Säurezahl des Polyesters A weniger als 50 und die Hydroxyzahl des Polyesters A weniger als 70 betragen,
dadurch gekennzeichnet daß man in einer ersten Verfahrensstufe aus den Komponenten (b), (c) und (d) sowie gegebenenfalls (e) und gegebenenfalls (f) ein verzweigtes Vorkondensat herstellt, dessen Säurereste zu mindestens 85 Mol-% aus Resten der Komponente (b) bestehen und das Reste einkondensierter Verzweigungsmittel (d) entsprechend 1 bis 15 Mol-%, bezogen auf die Summe der Alkoholreste enthält, wobei die Summe der Säure- und Hydroxylzahl 50 bis 120 beträgt und mindestens die Hälfte dieser Summe auf die Hydroxylzahl entfällt, an dieses Vorkondensat die Komponente (a) ankondensiert mit der Maßgabe, daß man als Komponente (a) entweder Fumarsäure einsetzt oder daß bei Einsatz von Maleinsäure(anhydrid) eine cis-trans-Isomerisierung im erforderlichen Umfang stattfinden kann.

2. Verfahren nach Anspruch 1, dadurch gekennzeichnet, daß man pro Mol Hydroxyl des Vorkondensats 0,2 bis 0,7 Mol Komponente (a) einsetzt.

3. Verfahren nach Ansprüchen 1 und 2, dadurch gekennzeichnet, daß man die 1. Verfahrensstufe bei 180 bis 220 °C und die 2. Verfahrensstufe bei 180 bis 210 °C ausführt.

**Claims**

1. A process for the production of unsaturated polyesters resins from
A. 30 to 70 parts by weight of α,β-ethylenically unsaturated polyester and
B. 30 to 70 parts by weight of a monomer copolymerizable with A,
polyester A being a reaction product of
(a) at least one α,β-ethylenically unsaturated dicarboxylic acid and/or its anhydride,
(b) at least one hydrogenated phthalic acid and/or its anhydride,
(c) at least one ether glycol,
(d) at least one branching agent,
(e) optionally other carboxylic acids,
(f) optionally other alcohols and
(g) optionally polyisocyanate,
the content of fumaric acid residues being at least 15 mole-%, based on dicarboxylic acid residues (a), the content of dicarboxylic acid residues (a) being at most 30 mol-%, based on the sum of the polycarboxylic acid residues, the content of ether glycol residues correspondingly being between 0.2 and 0.5 mole of ether groups per 100 g of polyester A, the content of residues of co-condensed branching agents being between 1 and 15 mol-%, based on the sum of the alcohol residues, the content of residues of other acids and other alcohols being in each base between 0 and 15 mole-%, based on the sum of all the acid and alcohol residues, the urethane group content being between 0 and 0.05 mole per 100 g of polyester A, the acid number of polyester A being less than 50 and the hydroxyl number of polyester A being less than 70,
characterized in that, in a first stage, a branched precondensate, at least 85 mole-% of whose acid residues consist of residues of component (b) and which contains residues of co-condensed branching agents (d) in a proportion corresponding to 1 to 15 mole-%, based on the sum of the alcohol residues, is produced from components (b), (c), (d), optionally (e) and optionally (f), the sum of the acid and hydroxyl numbers being between 50 and 120 and at least half that sum being contributed by the hydroxyl number; component (a) is condensed onto the precondensate thus prepared with the proviso that either fumaric acid is used as component (a) or, where maleic (anhydride) is used, a cis-/trans-isomerization can take place to the necessary extent.

2. A process as claimed in claim 1, characterized in that from 0.2 to 0.7 mole of component (a) is used per mole hydroxyl in the precondensate.

3. A process as claimed in claims 1 and 2, characterized in that the first stage of the process is carried out at 180 to 220 °C and the second stage at 180 to 210 °C.

## Revendications

1. Procédé de préparation de résines de polyesters insaturés à partir de :

A. 30 à 70 parties en poids d'un polyester à insaturation alpha, béta-éthylénique et

B. 30 à 70 parties en poids d'un monomère copolymérisable avec A,

le polyester A consistant en un produit de réaction de :

(a) au moins un acide dicarboxylique à insaturation alpha, béta-éthylénique et/ou son anhydride,

(b) au moins un acide phtalique hydrogéné et/ou son anhydride,

(c) au moins un éther-glycol,

(d) au moins un agent ramifiant,

(e) le cas échéant d'autres acides carboxyliques,

(f) le cas échéant d'autres alcools, et

(g) le cas échéant un polyisocyanate,

avec les conditions supplémentaires suivantes : la teneur en radicaux d'acide fumarique représente au moins 15 moles%, par rapport aux radicaux d'acides dicarboxyliques (a), la teneur en radicaux d'acides dicarboxyliques (a) est au maximum de 30 moles%, par rapport à la somme des radicaux d'acides polycarboxyliques, la teneur en radicaux d'éthers-glycols correspond à 0,2 à 0,5 mole de groupes éther pour 100 g du polyester A, la teneur en radicaux d'agent ramifiant condensé représente de 1 à 15 moles%, par rapport à la somme des radicaux d'alcools, la teneur en radicaux d'autres acides et d'autres alcools est pour chacune d'elle de 0 à 15 moles%, par rapport à la somme de tous les radicaux d'acides et d'alcools respectivement, la teneur en groupes uréthanne est de 0 à 0,5 mole pour 100 g du polyester A, l'indice d'acide du polyester A est inférieur à 50 et l'indice d'hydroxyle du polyester A est inférieur à 70, caractérisé en ce que, dans un premier stade opératoire, on prépare à partir des composants (b), (c) et (d) et le cas échéant (e) et le cas échéant (f) un précondensat ramifié dont les radicaux acides consistent pour au moins 85 moles%, en radicaux du composant (b) et qui contient des radicaux de l'agent ramifiant condensé (d) en quantité correspondant à 1 à 15 moles%, par rapport à la somme des radicaux d'alcools, la somme de l'indice d'acide et de l'indice d'hydroxyle va de 50 à 120, dont la moitié au moins correspond à l'indice d'hydroxyle, on condense sur ce précondensat le composant (a), avec la condition supplémentaire que l'on utilise en tant que composant (a) l'acide fumarique ou bien, lorsqu'on utilise l'acide maléique (ou son anhydride), il peut se produire une isomérisation cis-trans dans la mesure nécessaire.

2. Procédé selon la revendication 1, caractérisé en ce que l'on utilise de 0,2 à 0,7 mole du composant (a) par mole de groupes hydroxy du précondensat.

3. Procédé selon les revendications 1 et 2, caractérisé en ce que le premier stade opératoire est mis en œuvre à des températures de 180 à 220 °C et le deuxième stade opératoire à des températures de 180 à 210 °C.